# EUROPÄISCHE PATENTSCHRIFT

(11) **EP 2 909 639 B1**
(45) Veröffentlichungstag und Bekanntmachung des Hinweises auf die Patenterteilung: **17.06.2020**
(21) Anmeldenummer: 13766288.8
(22) Anmeldetag: 23.09.2013
(51) Int. Cl.: G01F 1/69, G01P 5/12, G01F 1/68, G01F 1/684

(54) **THERMISCHES DURCHFLUSSMESSGERÄT**
THERMAL FLOW RATE MEASUREMENT DEVICE
DÉBITMÈTRE THERMIQUE

(30) Priorität: 19.10.2012 DE 102012110012; 29.07.2013 DE 102013108099
(43) Veröffentlichungstag der Anmeldung: 26.08.2015
(73) Patentinhaber: Endress+Hauser Flowtec AG, 4153 Reinach (BL) (CH)
(72) Erfinder: BAUR, Tobias, CH-4145 Reinach (CH); GABERTHÜEL, Stephan, CH-4313 Moehlin (CH); PAPATHANASIOU, Panagiotis, CH-4127 Birsfelden (CH); PFAU, Axel, CH-4147 Aesch (CH); SCHULTHEIS, Hanno, 79539 Lörrach (DE)
(74) Vertreter: Andres, Angelika Maria
(86) Internationale Anmeldenummer: PCT/EP2013/069682
(87) Internationale Veröffentlichungsnummer: WO 2014/060187

(56) Entgegenhaltungen:
- DE-A1- 3 935 778
- DE-A1- 19 640 773
- DE-A1- 19 855 884
- DE-A1-102005 030 961
- JP-A- 2009 156 826

## Beschreibung

Die Erfindung betrifft ein thermisches Durchflussmessgerät nach dem Oberbegriff des Anspruchs 1, sowie eine Verwendung eines solchen thermischen Durchflussmessgerätes

Es sind Sensoren für Durchflussmessgeräte bekannt, welche nach dem thermischen Messprinzip arbeiten. Dieses Messprinzip beruht auf der Abkühlung eines beheizten Widerstandsthermometers, nachfolgend auch als heizendes und messendes oder aktives Sensorelement bezeichnet, dem durch das vorbeiströmende Messmedium Wärme entzogen wird. Die entzogene Energie wird durch ein Erhöhen des elektrischen Heizstroms wieder ausgeglichen. Dadurch stellt sich eine konstante Temperaturdifferenz zwischen dem heizenden und messenden, also dem aktiven Sensorelement und einem vorhandenen Referenztemperaturfühler ein, welches nachfolgend auch als messendes oder passives Sensorelement bezeichnet wird. Je grösser der Massedurchfluss ist, desto mehr Energie wird benötigt um diese Differenz zu halten. Der gemessene Heizstrom ist demzufolge proportional zum Massedurchfluss. Das thermische Messprinzip ist in der Verfahrenstechnik gut etabliert und wird in zahlreichen Anwendungen erfolgreich eingesetzt. Besonders anspruchsvoll ist die Anwendung des Messprinzips in Wasser und anderen Flüssigkeiten wie z.B. Öl, da hier die Wärmeübergänge und die benötigte Heizleistung im Vergleich zu Gasen wesentlich höher und die relevanten Stoffeigenschaften sehr stark temperaturabhängig sind. Bei Geschwindigkeiten >2,5 m/s kann es deshalb zu einer Abflachung der Kennlinie und damit zu einer verringerten Sensitivität kommen. Außerdem kann es bei geringer Beabstandung der Sensorelemente zueinander unter Umständen zu einem Übersprechen des aktiven Sensorelements zum temperaturmessenden Sensorelement kommen, z.B. bei tiefen Geschwindigkeiten <0,2 m/s.

Es sind Sensoren bekannt, welche sich aus zwei Sensorelementen, einem aktiven und einem passiven Sensorelement bestehen, welche jeweils eine zylindrische Sensorkappe aufweisen und aus einer Grundfläche eines Sensors herausstehen. In der Stirnfläche der Sensorkappen sind Widerstandssensoren eingelötet. Aufgrund der zylindrischen Sensorkappen weisen die Sensorelemente bereits eine gute thermische Isolation auf und so kein Übersprechen zustande kommt. Diese Sensoren verfügen allerdings über eine schlechtere Charakteristik in Wasser, als die zuvor genannten Sensoren. So erreicht bei steigendem Durchfluss die Kennlinie vergleichsweise schnell einen Sättigungsgrad, bei welcher eine maximale Leistung einspeisbar ist. Bei Erreichen dieser Leistungsgrenze kann trotz höherer Geschwindigkeit nicht mehr Wärme in die Strömung eingetragen werden. Da die Kennlinie den Messbereich für die Strömungsgeschwindigkeit des Mediums darstellt, bis welcher eine Messung erfolgen kann, ist bei einem schnellen Erreichen des Sättigungsgrades die Messung bei zu schnelleren Strömungen nicht mehr möglich.

Es ist nunmehr die Aufgabe der vorliegenden Erfindung den Messbereich des thermischen Durchflussmessgerätes zu erweitern.

Diese Aufgabe wird durch ein thermisches Durchflussmessgerät mit den Merkmalen des Anspruchs 1 gelöst.

Erfindungsgemäß weist ein thermisches Durchflussmessgerät zur Bestimmung und/oder Überwachung eines thermischen Massedurchflusses eines Messmediums durch ein Messrohr einen Sensor mit einem ersten Temperaturfühlerelement und zumindest einem zweiten Temperaturfühlerelement auf, die vorzugsweise Widerstandsthermometer aufweisen, wobei von den Temperaturfühlerelementen zumindest eines beheizbar ist, wobei der Sensor eine Längsachse und eine endständige Stirnfläche aufweist, welche in zumindest drei nebeneinander angeordnete Segmente aufgeteilt ist. Dabei ist zumindest ein erstes Segment in einer Schnittansicht gegenüber einer orthogonal zur Längsachse verlaufenden Ebene als eine geneigte Fläche ausgebildet. Das erste Segment, respektive die durch das Segment gebildete Fläche weist einen Flächennormalenvektor auf, der mit der Längsachse des Sensors einen Winkel von zumindest 5° einschließt. Dabei fungiert eines der beiden Temperaturfühlerelemente als aktives Sensorelement und das zweites der beiden Temperaturfühlerelemente als passives Sensorelement.

Die spezielle Geometrie der Stirnfläche des Sensors führt zu einer Erweiterung des Messbereichs des thermischen Durchflussmessgerätes.

Vorteilhafte Ausgestaltungen der Erfindung sind Gegenstand der Unteransprüche.

Die Stirnfläche ist in zumindest drei Segmente eingeteilt, einem stromaufwärtigen ersten Seitensegment, einem Mittelsegment und einem stromabwärtigen zweiten Seitensegment, wobei das erste Segment das stromaufwärtige erste Seitensegment und/oder das stromabwärtige zweite Seitensegment ist. Stromaufwärtig bedeutet, dass die Längsachse des Messrohres eine Strömungsrichtung des Mediums vorgibt, wobei die Strömungsrichtung von einer ersten Öffnung des Messrohres, durch welches das Medium einfließt zu einer zweiten Öffnung, durch welche das Medium aus dem Messrohr herausfließt, verläuft. Stromabwärtig ist die der stromaufwärtigen Richtung entgegengesetzte Richtung. Durch diese Aufteilung kann eine An- oder Abströmung des Mediums von dem Seitensegment in Strömungsrichtung erfolgen.

Es ist von Vorteil, wenn der Flächennormalenvektor der geneigten Fläche des ersten Segments mit der Längsachse einen Winkel von zumindest 8°, besonders bevorzugt zwischen 10-35° einschließt. Die Neigung der Flächen in diesem Bereich hat sich als besonders günstig für die Erweiterung des Messbereiches erwiesen.

Das stromaufwärtige erste Seitensegment kann vorteilhaft eine größere Fläche aufweisen als das stromabwärtige zweite Seitensegment.

Zur Ausbildung eines besonders optimierten Geschwindigkeitsprofils des Messmediums ist es von Vorteil, wenn zwischen dem stromaufwärtigen ersten Seitensegment und dem Mittelsegment eine erste Knickkante definiert ist, und dass zwischen dem stromabwärtigen zweiten Seitensegment und dem Mittelsegment eine zweite Knickkante definiert ist, und wobei der Abstand zwischen dem in Strömungsrichtung entgegensetzten äußersten randseitigen Punkt des stromaufwärtigen ersten Seitensegments zum ersten Knickkante im Wesentlichen gleich ist zum Abstand zwischen dem in Strömungsrichtung äußersten randseitigen Punkt des stromabwärtigen zweiten Seitensegments zur zweiten Knickkante

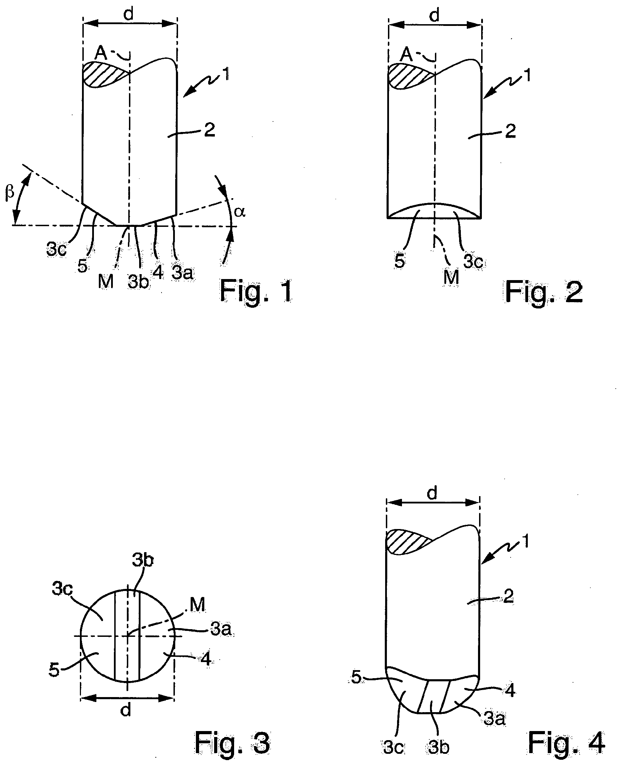

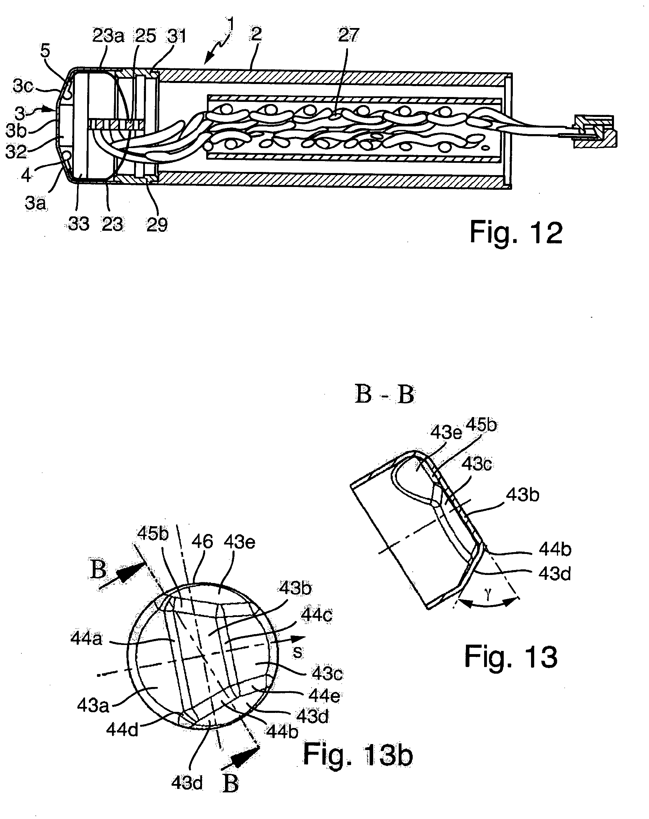

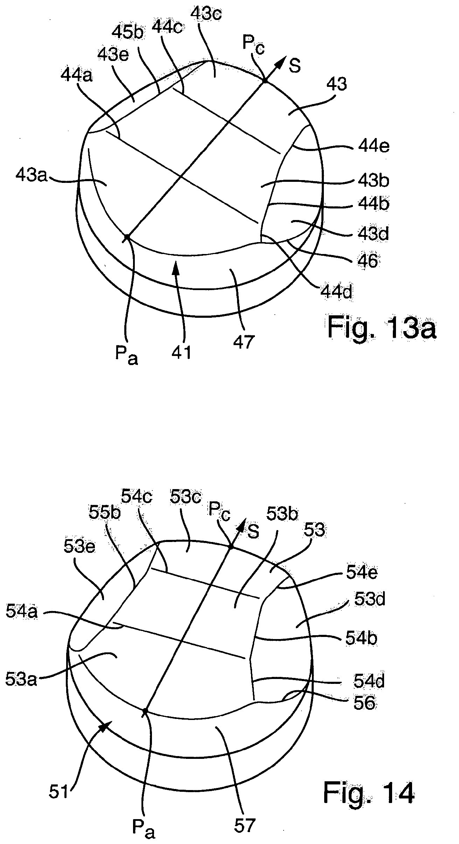

Die Stirnfläche ist vorzugsweise aus einem Metallblech, welche zwischen dem Messmedium und den Temperaturfühlerelementen angeordnet ist und wobei das Metallblech vorteilhaft zwischen 0,5-0,7 mm dick ist, um einen besseren Ausgleich zwischen Spannungsstabilität der Stirnfläche und Ansprechverhalten des Sensors zu erreichen. Die vorteilhafte Wandstärke gilt sowohl für die in Fig. 13 als auch für die in Fig. 1-4 und alle weiteren Ausgestaltungsvarianten des Sensors.

Weiterhin ist es für alle Sensorbauvarianten der vorliegenden Erfindung von Vorteil, wenn senkrecht zur Strömungsrichtung S des Mediums an das Mittelsegment an jedem Ende des Mittelsegments, jeweils ein das Mittelsegment stabilisierendes Stützsegment angrenzt. Dadurch wird ebenfalls eine höhere Spannungsstabilität ermöglicht.

Das stabilisierende Stützsegment ist gegenüber der Ebene des Mittelsegments abgewinkelt und zwar vorteilhaft in einem Winkel zwischen 10-80°, besonders bevorzugt in einem Winkel von 50-70° abgewinkelt ist

Um eine optimale Wärmeübertragung auf das Medium zu erreichen, ist es von Vorteil, wenn das erste beheizbare Widerstandsthermometer als plattenförmiges Dünnschichtelement ausgebildet ist und insbesondere sofern das erste Temperaturfühlerelement im Wesentlichen parallel zu der Fläche des ersten Segments ausgerichtet ist.

Um eine günstige Strömungsführung des Mediums entlang der Stirnfläche zu erreichen, weist das Mittelsegment 3b eine Fläche mit einem Flächennormalenvektor auf, welcher entlang der Längsachse verläuft.

Um vorteilhaft einen großen Messbereich zu ermöglichen sollte das erste Segment zumindest 5%, vorzugsweise zumindest 15%, insbesondere 20-40% der Stirnfläche bilden.

Es ist von Vorteil, wenn das erste Segment bestimmt ist zur Ausbildung einer vergleichsweise dicken thermischen Grenzschicht in einem strömenden Medium.

Es ist von Vorteil, wenn das erste und der zweite Temperaturfühlerelement jeweils über zwei Betriebszustände verfügen, wobei in einem ersten Betriebszustand das Temperaturfühlerelement auf eine konstante Temperatur eingestellt wird und in einem zweiten Betriebszustand das Temperaturfühlerelement die Mediumstemperatur ermittelt, wobei das erste Temperaturfühlerelement sich im ersten Betriebszustand befindet, sofern sich das zweite Temperaturfühlerelement im zweiten Betriebszustand befindet und wobei das thermische Durchflussmessgerät eine Schaltung aufweist zum Umschalten des ersten und des zweiten Temperaturfühlerelements zwischen dem ersten und dem zweiten Betriebszustand. Dies ist insbesondere günstig bei einer Strömungsumkehr so dass die Anordnung des aktiven Sensorelements und des passiven Sensorelements umgeschalten werden kann. Erfindungsgemäß dient ein entsprechendes thermisches Durchflussmessgerätes nach einem der vorhergehenden Ansprüchen zur Bestimmung und/oder Überwachung des thermischen Massedurchflusses einer durch ein Messrohr strömenden Flüssigkeit.

Ein thermisches Durchflussmessgerät ist beispielsweise aus JP 2009 156826 A bekannt.

Mehrere erfindungsgemäße Ausführungsbeispiele werden nachfolgend anhand von Figuren näher beschrieben. Sie zeigen:
- Fig. 1: Schnittansicht eines erfindungsgemäßen Sensors eines thermischen Durchflussgerätes;
- Fig. 2: Seitenansicht des Sensors;
- Fig.3: Draufsicht auf eine Stirnfläche des Sensors;
- Fig. 4: Perspektivansicht des Sensors;
- Fig. 5: schematische Darstellung eines Strömungsverlaufes an der Stirnfläche des Sensors bei geringen Geschwindigkeiten;
- Fig. 6: schematische Darstellung eines Strömungsverlaufes an der Stirnfläche des Sensors bei höheren Geschwindigkeiten;
- Fig. 7: Kennlinie des erfindungsgemäßen Sensors gegenüber einem Sensor mit gleichen Abmessungen und ebener Stirnfläche;
- Fig. 8: Schnittansicht eines weiteren erfindungsgemäßen Sensors eines thermischen Durchflussgerätes für Messrohre mit kleinen Nennweiten;
- Fig. 9: Seitenansicht des weiteren Sensors;
- Fig. 10: Draufsicht auf eine Stirnfläche des weiteren Sensors;
- Fig. 11: Perspektivansicht des weiteren Sensors;
- Fig. 12: Schnittansicht eines dritten erfindungsgemäßen Sensors;
- Fig. 13a: Perspektivansicht der Stirnfläche eines vierten erfindungsgemäßen Sensors;
- Fig. 13b: Draufsicht auf den vierten erfindungsgemäßen Sensor;
- Fig. 13c: Schnittansicht des vierten erfindungsgemäßen Sensors entlang der Schnittachse B-B der Fig. 13b;
- Fig. 14: Perspektivansicht der Stirnfläche eines fünften erfindungsgemäßen Sensors;
- Fig. 15 a-f: Gegenüberstellung der Strömungsfelder des vierten und fünften erfindungsgemäßen Sensors bei unterschiedlichen Strömungsgeschwindigkeiten;
- Fig. 16a-d: Gegenüberstellung des erfindungsgemäßen Sensors der Fig. 1-4 und der Fig. 13 in Belastungstests über 40 und 60 bar.

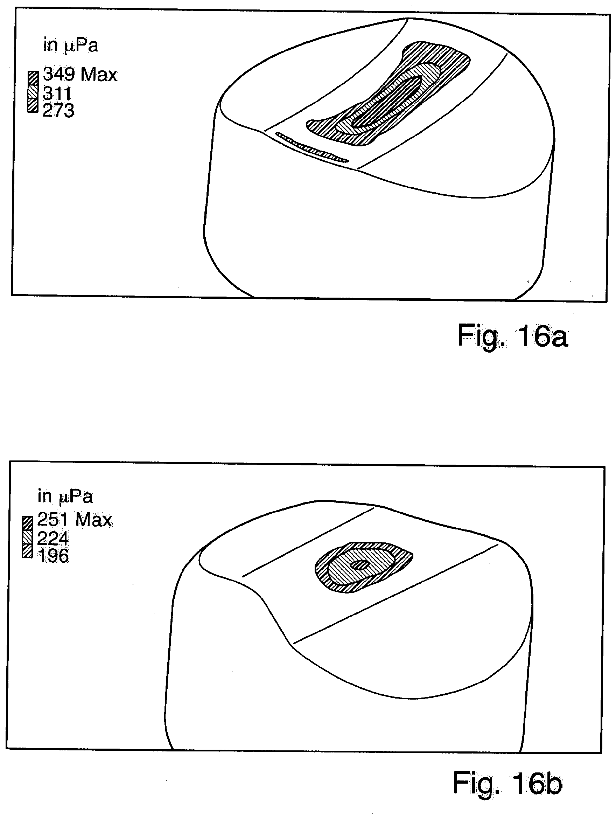

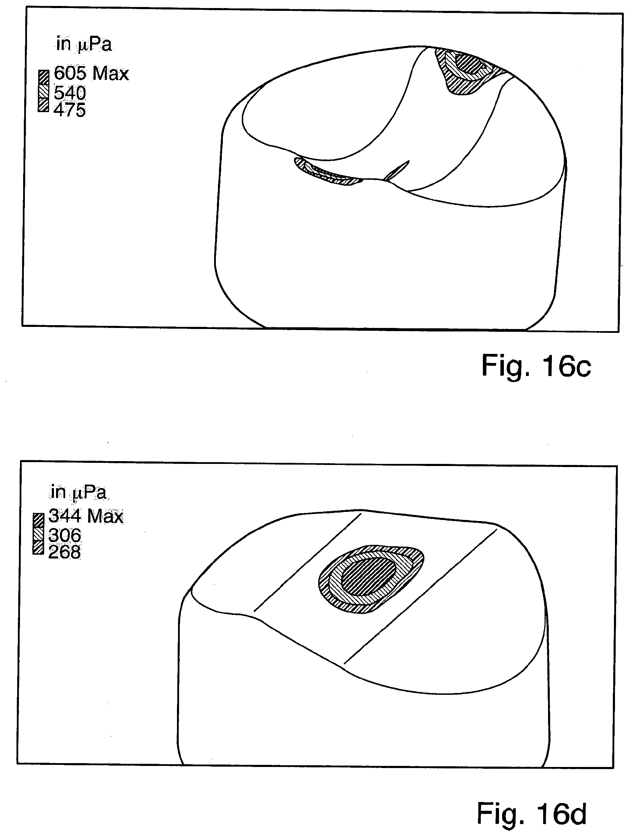

- Fig. 16 a: Spannungsverlauf und Verformung bei Druckbelastungen von 40 bar beim Sensor mit einer Sensorfläche gemäß Fig. 4;
- Fig. 16b: Spannungsverlauf und Verformung bei Druckbelastungen von 40 bar beim Sensor mit einer Sensorfläche gemäß Fig. 13;
- Fig. 16c: Spannungsverlauf und Verformung bei Druckbelastungen von 60 bar beim Sensor mit einer Sensorfläche gemäß Fig. 4;
- Fig. 16d: Spannungsverlauf und Verformung bei Druckbelastungen von 60 bar beim Sensor mit einer Sensorfläche gemäß Fig. 13; und

Fig. 1 zeigt einen Sensor eines thermischen Durchflussmessgerätes, welcher als ein thermischer Massestromsensor 1 ausgebildet ist.

Herkömmliche thermische Durchflussmessgeräte verwenden üblicherweise zwei möglichst gleichartig ausgestaltete beheizbare Widerstandsthermometer, die in, meist stiftförmigen Metallhülsen, sog. Stingers oder in zylindrischen Metallhülsen angeordnet sind und die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt in der Rohrleitung montiert sein. Einer der beiden Widerstandsthermometer ist ein sogenanntes aktives Sensorelement, der mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Bei dem zweiten Widerstandsthermometer handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometer wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Mass für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung, 't-switch', 't-trend' oder 't-mass' angeboten und vertrieben.

Bei der Ermittlung des Massedurchflusses kann ein thermisches Durchflussmessgerät bei der Messung von Flüssigkeiten an eine Höchstleistungsgrenze gelangen. Da Flüssigkeiten gegenüber Gasen einen wesentlich höheren Wärmeleitkoeffizienten aufweisen, wird bei höherer Geschwindigkeit eine größere Wärmeenergie von der Oberfläche des aktiven Temperatursensors abtransportiert. Bei zunehmender Geschwindigkeit des Mediums ist dabei schnell eine Sättigung der Sensorkennlinie bzw. die Leistungsobergrenze der Messelektronik erreicht, so dass der Messbereich auf Flüssigkeiten mit geringen Strömungsgeschwindigkeiten begrenzt ist. Dieser Nachteil wird durch einen Sensor eines thermischen Durchflussmessgerätes, wie es in Fig. 1-4 abgebildet ist, behoben.

Fig. 1-4 zeigt in mehreren Ansichten einen Sensor 1 für ein thermisches Durchflussmessgerät. Dieser Sensor 1 weist einen Sensorkorpus 2 mit einer zylindrischen Form und mit einer Längsachse A und einer endständigen Stirnfläche 3 mit einem Mittelpunkt M, durch welchen die Längsachse A verläuft, auf. Dieser zylindrische Sensorkorpus weist einen Durchschnitt d zwischen vorzugsweise 10-30mm, insbesondere zwischen 15 - 22 mm auf. Diese Stirnfläche 3 ist in mehrere Segmente 3a-3c aufgeteilt. Die Segmente sind nebeneinander angeordnet mit einem ersten Seitensegment 3a, einem Mittelsegment 3b und einem zweiten Seitensegment 3c.

Dabei ist zumindest ein erstes Seitensegment in der Schnittansicht der Fig. 1 als eine gegenüber der Längsachse A geneigte Fläche ausgebildet, deren Flächennormalenvektor mit der Längsachse einen Winkel α von zumindest 5°, vorzugsweise zumindest 8°, besonders bevorzugt zwischen 10-35° einschließt. Dabei ist die Fläche eben ausgebildet.

Dieses erste Seitensegment 3a ist bevorzugt ein Seitensegment, dessen geneigte Fläche in Richtung der Anströmseite des Sensors 1, also entgegen der Strömungsrichtung S, geneigt ist. Unterhalb des ersten Seitensegments 3a ist ein erstes Temperaturfühlerelement mit einem ersten Widerstandsthermometer 4 angeordnet, dessen Aufbau im Folgenden anhand einer beispielhaften Ausgestaltung näher beschrieben wird. Dieses Widerstandsthermometer 4 ist vorzugsweise als ein Dünnschichtelement, ausgebildet. Das Widerstandsthermometer 4 weist einen dreischichtigen Aufbau auf, mit einem Keramiksubstrat, einem mäanderförmig ausgebildeten Metallschicht, vorzugsweise aus Platin, und einer darüber angeordneten Glasschutzschicht. Von dem Metalldraht gehen eine Zu- und eine Ableitung ab.

Die Temperaturmessung erfolgt durch die Ausnutzung der Temperaturabhängigkeit eines elektrischen Widerstandes bei der Leitung von Strom. In diesem Betriebszustand wird der Widerstandsthermometer 4 als passiver Sensorelement eingesetzt werden. Das vorbeschriebene Widerstandsthermometer 4 misst als passives Sensorelement die Mediumstemperatur und bringt als aktives Sensorelement unter Einstellung der Stromstärke auch selbst eine Wärmemenge in das Medium. In diesem Fall ist das Widerstandsthermometer 4 des ersten Seitensegments 3a ein aktives Sensorelement, welches eine konstante Temperatur aufweist und Wärmeenergie an das vorbeifließende Medium abgibt.

Dieses Sensorelement bzw. Widerstandsthermometer 4 ist vorzugsweise als Dünnschichtelement plattenförmig aufgebaut. In einer besonders bevorzugten Ausführungsvariante der Erfindung ist das plattenförmige Dünnschichtelement im Wesentlichen parallel zu der Fläche des ersten Seitensegments 3a ausgerichtet. Kleinere Abweichungen von weniger als 10°, vorzugsweise weniger als 5° zu der Parallelebene können dabei auftreten.

Im Folgenden wird eine erste Ausführungsvariante beschrieben in welcher das erste Widerstandsthermometer 4, welches an oder unterhalb des ersten Seitensegments 3a angeordnet ist, als aktiver Sensorelement betrieben wird. Dabei handelt es sich bei dem anströmseitigen Seitenelement 3a um das Segment der Stirnfläche 3, auf welche die Strömung des Mediums in Strömungsrichtung S als erstes trifft.

Auf ähnliche Weise wie das erste Widerstandsthermometer 4 ist vorzugsweise ein zweites Temperaturfühlerelement mit einem zweiten Widerstandsthermometer 5 im Sensor 1 unterhalb des zweiten Seitensegments 3c angeordnet. Dabei fungiert dieses zweite Widerstandsthermometer 5 in der vorliegenden ersten Ausführungsvariante als passives Widerstandsthermometer zur Erfassung der Mediumstemperatur.

Besonders bevorzugt weist das Mittelsegment 3b eine Fläche mit einem Flächennormalenvektor auf, welcher entlang der Längsachse verläuft. Kleinere Abweichungen von weniger als 1°, vorzugsweise weniger als 0,5° zu der Parallelebene können dabei auftreten.

Weiterhin ist das zweite Seitensegment in der Schnittansicht der Fig. 1 als eine gegenüber der Längsache A geneigte Fläche ausgebildet, deren Flächennormalenvektor mit der Längsachse A einen Winkel β von zumindest 5°, vorzugsweise zumindest 8°, besonders bevorzugt zwischen 10-35° einschließt.

Dabei sind die Flächen des Sensors eben ausgebildet.

Dieses zweite Seitensegment 3c ist bevorzugt ein Seitensegment, dessen geneigte Fläche in Strömungsrichtung S des Messmediums geneigt ist.

Die durch die spezielle Ausgestaltung des Sensors 1 in Kombination mit dem an der ersten Stirnseite 3a angeordneten aktiven Sensorelements 4 erreichten Effekte werden nachfolgend näher erläutert.

Die Neigung des ersten anströmseitig angeordneten Seitensegments 3a bewirkt eine Vergrößerung der thermischen Grenzschichtdicke verglichen zu einer planaren Oberfläche, und es erfolgt die Ausformung einer vergleichsweise gleichmäßig über die Oberfläche verteilten eng anliegenden Grenzschicht. Durch diese Grenzschicht wird die Wärmeabgabe des aktiven Sensorelements reduziert. Anders gesagt, wird durch das Vorhandensein der Grenzschicht der Temperaturgradient zwischen Medium und Sensoroberfläche verringert, wodurch ein geringerer Wärmeeintrag erfolgt. Durch die Grenzschicht benötigt der Sensor eine geringere Leistung im Messbetrieb.

In einer zweiten bevorzugten Ausführungsvariante der Erfindung wird das zweite Widerstandsthermometer 5 des stromabwärtig angeordneten zweiten Seitensegments 3c als aktives Sensorelement betrieben und das erste Widerstandsthermometer 4 des stromaufwärtia angeordneten ersten Seitensegments 3a als passives Sensorelement.

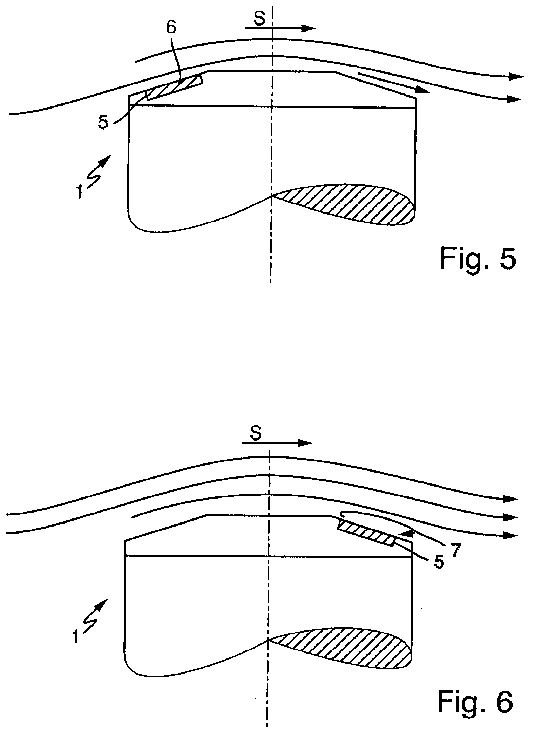

Bei geringeren Strömungsgeschwindigkeiten erfolgt ein Grenzschichtaufbau über die gesamte Stirnfläche 3 des Sensors und liegt in besonders hoher Schichtdicke im stromabwärtigen Bereich vor. Dies ist in Fig. 5 dargestellt. Diese Grenzschicht 6 ermöglicht, wie schon im vorangegangenen Ausführungsbeispiel beschrieben, einen geringeren Wärmeeintrag in das Medium und damit ein Hinauszögern des Sättigungsgrades auf höhere Fließgeschwindigkeiten des Mediums.

Im hinteren Teil am Übergang zwischen dem Mittelsegment 3b und dem zweiten stromabwärtigen Seitensegment 3c wird zudem eine Abrisskante geschaffen, an welcher die Strömung bei höheren Geschwindigkeiten abreißt. Zugleich wird dabei bei erhöhter Geschwindigkeit des Mediums eine Rezirkulation 7 aufgebaut, also eine Strömung welche der Hauptströmungsrichtung zumindest teilweise entgegengerichtet ist. Dies ist in Fig. 6 dargestellt. Diese Rezirkulation ist langsamer, vorzugsweise um zumindest 60% langsamer, besonders bevorzugt um mindestens 80% langsamer als die Hauptströmung, verhält sich zur Hauptströmung jedoch proportional. Der der Hauptströmung entgegengerichtete Teil der Rezirkulation streicht in Mediumsrichtung unterhalb des Übergangs bzw. unterhalb der Abrisskante an dem zweiten stromabwärtigen Seitensegment vorbei und nimmt dabei eine geringere Wärmeenergie auf, als dies bei der Hauptströmung der Fall wäre. Dadurch wird weniger Leistung zur Aufrechterhaltung der Temperatur benötigt und eine Leistungssättigung tritt erst bei sehr hohen Fließgeschwindigkeiten auf.

Somit beruht die optimierte Geometrie des Sensors auf zwei unterschiedlichen Phänomenen, der Ausbildung einer strömungsgeschwindigkeitsabhängigen Rezirkulation 7 im Abströmbereich bei hohen Geschwindigkeiten und der Ausbildung einer einheitlichen Grenzschicht im Anströmbereich.

Zusammengefasst liefert die neue Sensorgeometrie stabilere und verlässlichere Messwerte als bisherige Geometrien.

Der in Fig. 1-4 dargestellte Sensor eignet sich hervorragend für Strömungen bei niedrigen Drücken bis zu etwa 20 bar. Dabei weist der Sensor im Bereich der Stirnfläche eine Wandstärke von vorzugsweise 0,3 - 0,5 mm, insbesondere 0,38 - 0,42 mm auf. Die Wandstärke ist auf die Ansprechzeit des Sensors optimiert.

In einer weiteren nicht-näher dargestellten Ausführungsvariante ist die Stirnfläche als Kappe auf einen zylindrischen Sensor aufgesetzt, so dass die Kappe im Falle einer Verschmutzung einfach austauschbar ist. Alternativ können diese Kappen auch auf bereits bestehenden Sensoren, insbesondere mit ebender Stirnseite, aufgesetzt werden, so dass ein Nachrüsten bereits bestehender Sensoren möglich ist.

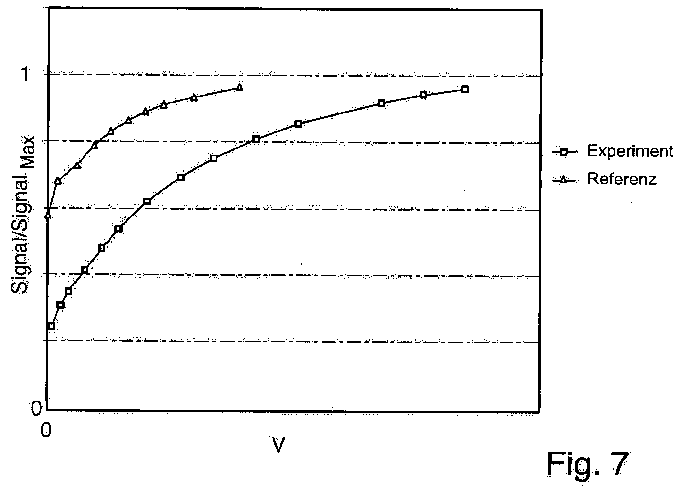

In Fig. 7 ist der Einfluss der Geometrie der Stirnfläche eines erfindungsgemäßen Sensors auf die Kennlinie näher beschrieben. Dabei beschreibt die X-Achse eine Strömungsgeschwindigkeit eines Mediums. Weiterhin beschreibt die y-Achse des hier dargestellten Diagrammes ein Signal/Signal(max.)-Verhältnis, wobei Signal(max.) die Leistungsobergrenze des Sensors, beispielsweise die maximal einspeisbare Wärmeleistung, repräsentiert. Das Signal stellt einen aktuellen Istwert, beispielsweise eine ins Medium eingebrachte Wärmeleistung dar. Erreicht das Signal/Signal(max.)-Verhältnis den Wert 1, so ist eine Sättigung eingetreten und keine Messung mehr möglich.

Wie man anhand der Fig. 7 erkennen kann ist diese Sättigung bei mehr als dem doppelten Betrag der Strömungsgeschwindigkeit (v) erreicht.

Die Biotzahl, welche den Wärmetransport von der Oberfläche zum umgebenden Medium zur Wärmeleitung durch den Körper beschreibt, ist aufgrund der Grenzschicht im Vergleich zu einem Sensor mit überwiegend ebener Stirnfläche verringert.

Ab welchen Strömungsgeschwindigkeiten eine Rezirkulation aufgebaut wird, hängt nicht zuletzt von der Art des Mediums ab. Entsprechend kann durch die Neigungswinkel der Seitensegmente bei unterschiedlichen Medien variieren.

Darüber hinaus kann die Stirnfläche des Sensors vorteilhaft einen Steg aufweisen. Durch die stegförmige Ausbildung der Stirnfläche wird der Mediumsströmung ein geringerer Widerstand entgegengesetzt, was zu einer Verringerung des Druckverlustes insgesamt führt.

Dieser Steg kann vorzugsweise in Strömungsrichtung des Mediums eine trapezoidale Form aufweisen. Besonders bevorzugt ist es allerdings, wenn die Stirnfläche einen stufenförmigen Aufbau aufweist, mit zwei Seitenstufen und einer gegenüber den Seitenstufen hervorstehenden Mittelstufe.

Es ist von Vorteil, wenn der Steg um zumindest 5%, vorzugsweise mehr als 10% insbesondere mehr als 15% seiner Pfadlänge aus dem Sensor hervorsteht, wobei sich die Pfadlänge des Steges quer über die gesamte Stirnfläche erstreckt. Dadurch kann eine genauere Erfassung der Mediumstemperatur sichergestellt werden. In die Pfadlänge geht dabei die Oberflächentopologie der Stirnflächenoberfläche ein. Diese Pfadlänge entspricht in seiner minimalen Ausdehnung, bei einer ebenen Stirnfläche, dem Durchmesser des Sensors, kann allerdings auch größer als der Durchmesser sein.

Insbesondere kann der Steg um zumindest 20%, vorzugsweise mehr als 40% insbesondere mehr als 60% seiner Breite aus dem Sensor hervorstehen. Die Breite bezieht sich dabei auf eine senkrecht zur Längsachse des Sensors angeordnete oder in oder gegen Mediumsrichtung geneigte planare Oberfläche.

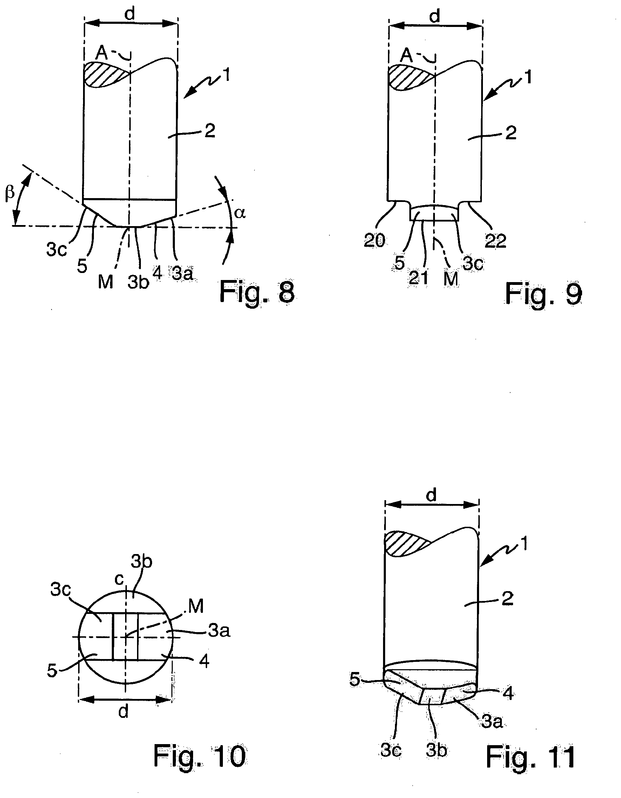

Ein Ausführungsbeispiel mit einem Steg ist in den Fig. 8-11 beispielhaft dargestellt.

Zylindrische Sensorkappen würden beim Einsatz in Messrohren mit kleineren Nennweiten für eine Stauung der Strömung sorgen, was sich aufgrund der dabei auftretenden Druckverluste negativ auf die Messgenauigkeit des Sensors auswirkt. Zur Verringerung der Druckverluste beim Einsatz in kleineren Rohrdurchmessern weist die Stirnfläche des Sensors der Fig. 8-11 einen Steg auf, welcher im konkreten Ausführungsbeispiel als Mittelstufe 21 ausgebildet ist. Dieser Steg steht beim Sensor im eingebauten Zustand in Richtung einer Messrohrachse hervor. Während seitlich vom Steg angeordnete Seitenbereiche gegenüber dem Steg zurückgesetzt angeordnet sind. Diese zurückgesetzte Anordnung der Seitenbereiche kann in Form von Stufen erfolgen, wie dies in den Fig. 8-11 dargestellt ist oder durch Schrägen, so dass im letzteren Fall der Steg eine trapezartige Form aufweist. Nachfolgend soll nunmehr im Detail ein Steg beschrieben werden, welcher sich durch eine stufenförmig aufgebaute Stirnfläche ausbildet.

Während die vorgenannten Segmente 3a-3c, umfassend das Mittelsegment und die beiden Seitensegmente auf einer ersten Achse C zueinander angeordnet sind, so wird der stufenförmige Aufbau des Sensors über eine zweite Achse, die Längsachse A, definiert, welche senkrecht zur ersten Achse C angeordnet ist. Dabei muss der nicht zwingend auf seiner zum Medium äußeren Oberfläche einen segmentweisen Aufbau aufweisen, sondern der Steg kann anstelle dessen auch eine ebene Fläche aufweisen. Allerdings ist der segmentweise Aufbau aufgrund der vorbeschriebenen Eigenschaften besonders von Vorteil.

Der stufenförmige Aufbau zeigt drei Stufen, eine erste Seitenstufe 20, die Mittelstufe 21 und eine zweite Seitenstufe 22. Die Mittelstufe steht beim eingebauten Zustand des Sensors in Richtung Messrohrachse gegenüber den Seitenstufen hervor. Auf der Mittelstufe sind die vorgenannten Widerstandsthermometer angeordnet.

Die Seitenbereiche, hier als Seitenstufen ausgebildet, setzen der Strömung des zu messenden Mediums einen geringeren Widerstand entgegen als eine zylindrisch ausgebildete segmentweise angewinkelte Stirnfläche.

Die umfangsseitigen Endpunkte der Seitenstufen definieren dabei eine Kreisfläche.
Der Steg steht dabei vorzugsweise am Mittelpunkt um mehr als 20% seiner Breite und/oder 5% seiner Länge dieser Kreisfläche hervor, vorzugsweise um mehr als 40% seiner Breite und 10% seiner Länge, insbesondere mehr als 60% seiner Breite und 15% seiner Länge.

Dabei entspricht die Breite des Steges zumindest 10% des Durchmessers des Sensors.

Die in Fig. 8-11 abgebildete Ausführungsvariante kann vorzugsweise bei Durchflussmessgeräten mit Messrohren einer Nennweite von kleiner oder gleich DN50 verwendet werden, insbesondere jedoch bei Nennweiten DN15 und DN25.

Darüber hinaus wird in Fig. 12 das Anbindungskonzept der Temperaturfühlerelemente zu einer Auswerteeinheit näher gezeigt. Dabei weist der in Fig. 1-7 beschriebene Sensor das Gehäuse auf, umfassend einen Gehäusekörper und eine Gehäusekammer in welcher Gehäusekammer endständig jeweils die zwei Temperaturfühlerelemente, welche insbesondere als Dünnfilm-Widerstandsthermometer ausgebildet sind, angeordnet sind, wobei eines der Temperaturfühlerelemente beheizbar ist, wobei von jedem Temperaturfühlerelementen zumindest ein Anschlussdraht abgeht, welcher mit einer Platine verbunden ist, wobei die Platine in der Gehäusekammer angeordnet ist, wobei die Platine durch eine Rastverbindung in dieser Gehäusekammer positioniert ist

Durch die Positionierung der Platine in der Gehäusekammer mittels einer Rastverbindung gelingt eine Erleichterung der Montage.

Es ist zudem von Vorteil, wenn die Gehäusekammer eine Verstärkungsschicht aufweist, welche Verstärkungsschicht zur Verrastung mit der Platine einen Eingriff, also eine Vertiefung, oder einen Vorsprung aufweist oder ausbildet.

Dies ist insbesondere von Vorteil, sofern ein endständiger Teil des Gehäuses als Tiefziehkappe mit einer Wanddicke von weniger als 2 mm, vorzugsweise weniger als 1,5 mm, insbesondere weniger als 0,8 mm ausgebildet ist.

Um eine dauerhafte Anbindung der Verstärkungsschicht an den Gehäusekörper zu ermöglichen, kann ein Stoffschluß beider Bauteile durchgeführt werden, beispielsweise durch Schweißen oder Löten.

Der Anschlussdraht des ersten Temperaturfühlerelements ist vorteilhaft zugentlastend in einer ersten Richtung durch die Platine geführt und mit dieser verbunden.

Eine besonders vorteilhafte zweiseitige Zugentlastung wird erreicht, indem zumindest ein Anschlussdraht eines zweiten Temperaturfühlerelements zugentlastend in einer der ersten

Richtung entgegengesetzten zweiten Richtung durch die Platine geführt und mit dieser verbunden ist.

Es ist von zudem von Vorteil, wenn der Anschlussdraht im Bereich der Platine mit einer Vergussmasse umgeben ist. Hauptsächlich bewirkt die Vergussmasse eine mechanische Festigkeit während des Alltagsbetriebes des Sensors.

Die Gehäusekammer kann vorteilhaft zumindest einen ersten elastischen Körper zum Führen des Anschlussdrahtes aufweisen.

Durch den elastischen Körper, welcher beispielsweise als Scheibe ausgebildet sein kann, wird eine Führung des Anschlussdrahtes während des Produktionsprozesses erreicht und damit eine geringere Anfälligkeit des Messsignals bei Vibrationen.

So ist es von Vorteil, wenn das Gehäuse, insbesondere die Gehäusekammer, einen zweiten elastischen Körper aufweist, welcher sich an dem ersten elastischen Körper und/oder an einer Wandung des Gehäuses abstützt und welcher eine Rückstellkraft auf die verrastete Platine ausübt. Dadurch wird eine bessere Verrastwirkung erreicht.

Die Gehäusekammer weist dabei eine Vergussmasse auf, wobei die Temperaturfühlerelemente vorteilhaft vergussmassefrei in der Gehäusekammer angeordnet sind.

Insbesondere können der erste und der zweite elastische Körper jeweils Silikonkörper sein. Silikon weist eine gute Temperaturbeständigkeit und eine gute chemische Beständigkeit auf.

Eine gute Dichtigkeit durch die elastischen Körper, insbesondere durch bei deren Ausgestaltung als Silikonkörper, kann auch bei Temperatursensoren erreicht werden, welche als Vierleitermessgeräte ausgebildet sind.
Alternativ oder zusätzlich weist der Temperatursensor, insbesondere der Sensor für das thermische Durchflussmessgerät, ein Gehäuse auf umfassend einen Gehäusekörper und eine Gehäusekammer in welcher Gehäusekammer endständig jeweils zwei Temperaturfühlerelemente, welche insbesondere als Dünnfilm-Widerstandsthermometer ausgebildet sind, angeordnet sind, wobei eines der Temperaturfühlerelemente beheizbar ist, wobei von jedem Temperaturfühlerelementen zumindest ein Anschlussdraht abgeht, welcher mit einer Platine verbunden ist, wobei die Platine eine erste Anzahl Materialausnehmungen, insbesondere Löcher, aufweist zum Anschluss von Anschlussdrähten und/oder Kabeln und eine zweite Anzahl Materialausnehmungen, insbesondere Löcher aufweist zur Verminderung der thermischen Ausdehnung der Platine.

Durch die Verminderung der thermischen Ausdehnung kann eine Schädigung der Platine, z.B. beim Verguss, aufgrund unterschiedlichen thermischen Ausdehungen zwischen der Platine und dem Verguss vermieden werden.

Dabei kann die zweite Anzahl von Materialausnehmungen, insbesondere Löcher, in auf der Platine angeordneten Leiterbahnen angeordnet sein.

Das Anschlusskonzept des Sensors wird nachfolgend im Detail anhand von Fig. 12 erörtert.

In dem in Fig. 12 bevorzugten dritten Ausführungsbeispiel für einen Sensor sind Bauteile integriert, welche zur Erleichterung der Herstellung und der Verminderung der Ausschussrate beitragen. Der in Fig. 12 gezeigte Sensor stimmt im Wesentlichen in der Sensorgeometrie mit dem Sensor der Fig. 1-7 überein.

In der Gehäusekammer sind endständig jeweils einer der Widerstandsthermometer (RTD) 4 oder 5 parallel zu einem der Seitensegmente 3a und 3c eingesetzt, von denen zumindest ein Widerstandsthermometer beheizbar ist und welche im vorliegenden Ausführungsbeispiel als Dünnfilm-Widerstandsthermometer ausgebildet sind. Zur Vereinfachung wird nachfolgend lediglich die Anordnung eines der Widerstandsthermometers 4 oder 5 in der Gehäusekammer erläutert.

Das Widerstandsthermometer ist auf der Innenseite des Gehäuses 1 in der Gehäusekammer angelötet. Von dem Widerstandsthermometer 20 gehen jeweils zwei Signalpfade hier in Form von Anschlussdrähten 23 ab, die vorzugsweise vergoldet sind. Durch diese Anschlussdrähte erfolgt eine Anbindung des Dünnfilm-Widerstandsthermometers an eine Platine 25.

Die Anschlussdrähte des ersten der beiden Widerstandsthermometer sind in einer ersten Richtung in der Platine 25 angeordnet und die Anschlussdrähte des zweiten der beiden Widerstandsthermometer an oder in einer der ersten Richtung entgegengesetzten zweiten Richtung an oder in der Platine 25 angeordnet.

Endständig im Bereich der Stirnseite ist der Gehäusekorpus vorteilhaft durch eine Tiefziehkappe mit geringer Wanddicke von vorzugsweise zwischen 0,5 bis 2 mm gebildet. Dadurch wird eine schnelle Wärmeübertragung zwischen dem Widerstandsthermometer 4 oder 5 und dem Medium ermöglicht.

Wie in Fig. 12 erkennbar, werden die Anschlussdrähte zunächst jeweils an der Außenseite der Gehäusekammer entlanggeführt. Anschließend werden die Anschlussdrähte 23 zu einer Platine 25 hingeführt und zugentlastend an dieser Platine 25 befestigt. Die zugentlastende Befestigung der Anschlussdrähte erleichtert die Montage des Temperatursensors.

Die Anschlussdrähte des ersten der beiden Widerstandsthermometer sind in einer ersten Richtung in der Platine 25 angeordnet und die Anschlussdrähte des zweiten der beiden Widerstandsthermometer an oder in einer der ersten Richtung entgegengesetzten zweiten Richtung an oder in der Platine 25 angeordnet. Durch diese Anordnung können Kabel 27 bzw. Vierleiterkabel beidseitig von der Platine weggeführt werden. Durch die geänderte Anordnung der Anschlussdrähte und der Kabel bzw. Vierleiterkabel an die Platine kann ein Montagevorteil erreicht werden.

Von der Platine 25 gehen mehrere Signalpfade ab, vorliegend in Form von den ummantelten Kabeln 27, welche den Temperatursensor mit einer Auswerteeinheit verbinden. Diese gehen in Fig. 2 einseitig von der Platine ab.

Nach der Montage des Temperatursensors wird der Innenraum des Temperatursensors mit einer Vergussmasse ausgefüllt.

Die Platine 25 weist seitliche Rastelemente 28 auf, welche mit einem Eingriff 29 des Gehäuses 1, also eine Vertiefung im Gehäuse, oder alternativ einem Vorsprung des Gehäuses eingreifen können. Durch die Verrastung ist eine Positionierung der Platine an einer vorbestimmten Position im Gehäuse möglich.

Zur Schaffung des Eingriffs 29 bedarf es allerdings einer gewissen Wandstärke, so dass der Eingriff in Form einer Nut eingefräst werden kann. Dies kann allerdings aufgrund der geringen Wandstärke der endständigen Tiefziehkappe nicht gewährleistet werden. Erfindungsgemäß wird daher ein Verstärkungselement mit einem Eingriff, vorzugsweise einer umlaufenden Nut, in der Gehäusekammer an der Wandung der Tiefziehkappe angeordnet.

Durch dieses Verstärkungselement 31 wird eine Verrastung der Platine 25 mit dem Gehäuse 1 ermöglicht

Alternativ oder zusätzlich kann auch das Gehäuse 1 Rastelemente aufweisen, welche mit einem Eingriff oder Vorsprung der Platine 25 verrasten können. Diese Rastelemente werden ebenfalls durch ein Verstärkungselement, welches an der Tiefziehkappe angeordnet ist, bereitgestellt.

Die Gehäusekammer des Temperatursensors ist endständig zwischen der Platine der Gehäusewandung mit den darauf angebrachten Widerstandsthermometern mit Silikonkörpern 32, 33 ausgefüllt. Die Widerstandsthermometer bleiben somit nach dem Verguss des Sensors vergussmassefrei, da sie durch die Silikonkörper vor einem Kontakt mit der Vergussmasse abgeschirmt werden.

Zugleich entwickeln die Silikonkörper aufgrund ihrer Eigenelastizität Rückstellkräfte, welche auf die Platine 25 einwirken und ein wirkungsvolleres Verrasten ermöglichen. Dabei liegt die Platine vorzugsweise zumindest auf einem der Silikonköper auf.

Nachfolgend soll die zugentlastende Befestigung bzw. Verbindung der Anschlussdrähte 23 an der Platine 25 näher erläutert werden.

Sie erfolgt derart, dass die Anschlussdrähte durch ein erstes Loch in der Platine 25 geführt werden, anschließend in eine Richtung senkrecht zum Lochverlauf des ersten Loches geführt werden und anschließend in eine Richtung parallel zum Lochverlauf an der Platine geführt und befestigt werden. Somit erfolgt die Befestigung an einer Wandung der Platine, die parallel zum ersten Loch verläuft. Somit werden die Anschlussdrähte in einer ersten Richtung A in das Loch der Platine eingeführt und in eine zweite Richtung B, die entgegengesetzt zur ersten Richtung A ist, an der Platine befestigt.

Derartige zugentlastende Anordnungen an Platinen sind aus anderen Anwendungsbereichen bereits bekannt und dienen einer dauerhaften Befestigung von Anschlussdrähten an einer Platine.

Im vorliegenden Fall jedoch dient die Zugentlastung der Anschlussdrähte lediglich einer besseren Stabilität der Anbindung vor. Daher erleichtert die zugentlastende Befestigung im Wesentlichen die Montage des Temperatursensors.

Dabei ergänzen sich einzelne Maßnahmen, welche für sich genommen bereits Vorteile mit sich bringen, idealerweise zu einem Gesamtkonzept.

Das vorgenannte Anschlusskonzept kann grundsätzlich auf alle bekannten Mehrleitermesstechniken der thermischen Durchflussmessung angewandt werden. Fig. 13 und 14 zeigen eine vierte und fünfte erfindungsgemäße Variante eines Sensors 41 und 51 für ein thermisches Durchflussmessgerät. Dieser Sensor weist eine Stirnfläche 43, 53 auf, die an höhere Drücke, insbesondere über 20bar, angepasst ist. Die Aufteilung der Stirnfläche 43, 53 in Strömungsrichtung S des Mediums entspricht der in Fig. 1-4 dargestellten Ausführungsvariante. Dabei ist die Stirnfläche 43, 53 in in ein Mittelsegment 43b, 53b aufgeteilt, welches im Wesentlichen auf einer Ebene senkrecht zur Längsachse A des Sensors verläuft und zwei angewinkelte Seitensegmente 43a, 53a und 43 c, 53c. Erweist vorzugsweise eine Wandstärke im Bereich der Stirnfläche des Sensors zwischen 0,5-0,7 mm auf, besonders bevorzugt zwischen 0,55 - 0,65 mm. Der Heizer, also das aktive Sensorelement, befindet sich dabei vorzugsweise unterhalb des Seitensegments 43a, 53a, welches anströmseitig im Messmedium angeordnet ist. Das passive Sensorelement befindet sich vorzugsweise unterhalb des abströmseitigen Seitensegments 43c, 53c des Sensors 41, 51.

Randseitig wird das Mittelsegment 43b, 53b in Strömungsrichtung S des Mediums durch Knickkanten 44a, 44c zu den Seitensegmenten 43a, 53a und 43c, 53c begrenzt. Senkrecht zur Strömungsrichtung S des Mediums grenzt an das Mittelsegment 43b, 53b an jedem Ende des Mittelsegments 43b, 53b jeweils ein das Mittelsegment stabilisierendes Stützsegment 43d, 53d und 43e, 53e an.

Dieses Stützsegment 43d, 53d oder 43e, 53e ist gegenüber der Ebene des Mittelsegments 43b, 53b in einem Winkel γ zwischen 10-80°, besonders bevorzugt in einem Winkel von 50-70° abgewinkelt, derart, dass zwischen dem Mittelsegment und demStützsegment 43d, 53d oder 43e, 53e jeweils eine Knickkante 44b, 54b und 45 b, 55b gebildet wird.

Nachfolgend wird zur Vereinfachung jeweils nur die Geomentrie des Stützsegments 43d der Fig 13 näher beschrieben. Es versteht sich allerdings aus der Fig 13 heraus, dass die nachfolgenden geometrischen Merkmale spiegelsymmetrisch auch auf das Stützsegment 43e zutreffen.

Die in Fig. 13 dargestellte Ausführungsvariante weist zusätzlich zur vorgenannten Knickkante 44b weitere daran angrenzende Knickkanten 44d, 44e jeweils zwischen dem Stützsegment 43d oder 43e und den am Mittelsegment in Strömungsrichtung S angrenzenden Seitensegmenten 43a und 43c auf. Die angrenzenden Knickkanten 44d und 44e sind dabei nicht gleich groß und spiegelsymmetrisch gegenüber einer durch den Sensormittelpunkt verlaufenden Spiegelebene, sondern asymmetrisch ausgebildet. Das Stützsegment 43 d wird zudem von einer bogenförmigen Knickkante 46 begrenzt, an welcher das Seitensegment 43d in eine zylindrische Mantelfläche 47 übergeht.

Wie in Fig. 13 ersichtlich, werden durch die asymmetrische Ausbildung des Stützsegments 43 d und e eine Begrenzung der Seitensegmente 43 a und c, wobei diese Seitensegmente nunmehr nicht mehr gleich groß ausgestaltet sind, sondern das in Strömungsrichtung S gesehene vordere Seitensegment 43a, welches zugleich eine Anströmseite für das Medium bereitstellt, größer ist als das in Strömungsrichtung S gesehene hintere Seitensegment 43c, welches zugleich eine Abströmseite für das Medium bereitstellt. Die Fläche des ebenen anströmseitigen Seitensegments ist vorzugsweise 1,1 bis 2-fach, besonders bevorzugt 1,2 bis 1,5-fach, größer als die Fläche des ebenen abströmseitigen Seitensegments 43c.

Die Fläche des ebenen Mittelsegments 43 b entspricht vorzugsweise dem 0,8 bis 1,2 fachen der Fläche des anströmseitigen angrenzenden ebenen Seitensegments 43a. Sie ist in jedem Fall größer als die Fläche des abströmseitigen Seitensegments 43c.

Die Fläche der ebenen abgewinkelten Stützsegmente 43d und 43e betragen vorzugsweise das 0,5 bis 0,8 fache des Mittelsegments 43b.

Zwischen den Seitensegmenten, dem Mittelsegment und den Stützsegmenten befinden sich die vorbeschriebenen Knickkanten 44a -e. Diese sind abgerundet und weisen einen Biegeradius zwischen 1,3 bis 3 mm auf. Dadurch wird ein besonders weicher Übergang zwischen den einzelnen Flächen gewährleistet und eine gleichmäßige Grenzschicht des Messmediums auf der Stirnfläche 43 ausgebildet.

Beide in Fig. 13 und 14 dargestellten Ausführungsvarianten sind druckstabilere Sensorgeometrien gegenüber der in Fig. 1-4 dargestellten Ausführungsform.

Die in Fig. 13 dargestellte asymmetrische Variante der angrenzenden Knickkanten 43d und 43e ist dabei der in Fig. 14 dargestellten Ausführungsvariante bevorzugt.
Demgegenüber weist die in Fig.14 dargestellte weniger bevorzugte Ausführungsvariante symmetrische an das Mittelsegment 54b angrenzende Knickkanten 54d und 54e auf, sowie geringer angestellte und gleich große anström- und abströmseitige an das Mittelsegment 53b in Strömungsrichtung angrenzende Seitensegmente 53 a und c.

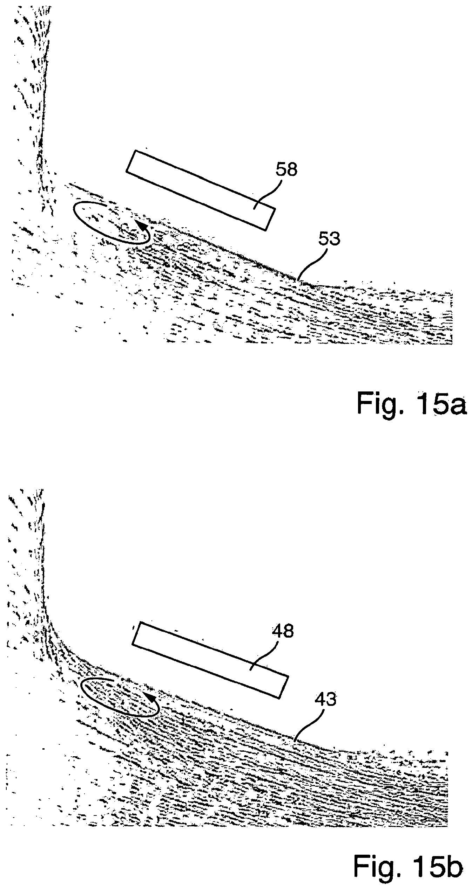

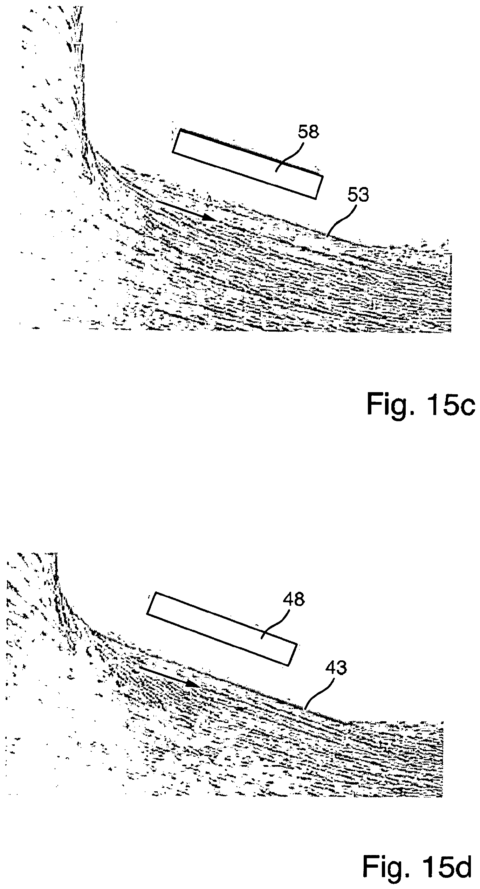

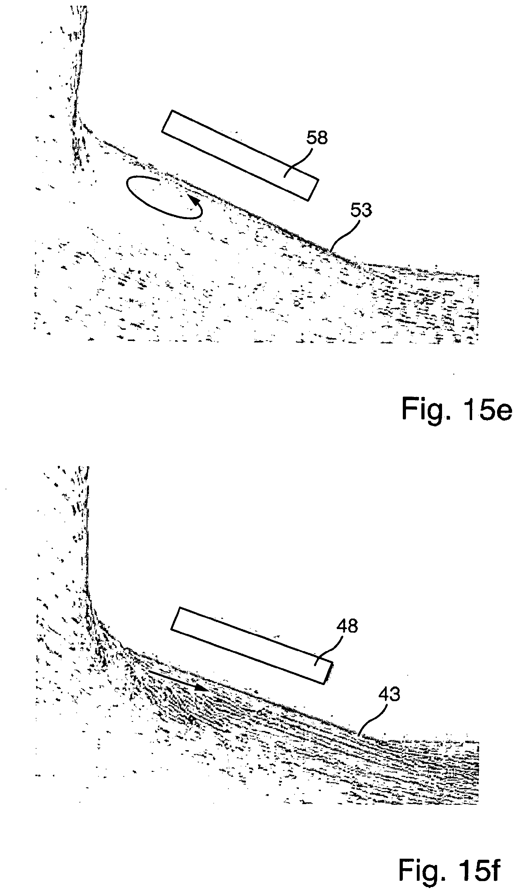

Fig. 15 a-f zeigt ein Geschwindigkeitsprofil der Strömung an der Stirnfläche 43, 53 des Sensors 41 und 51.

Fig. 15 a, b zeigen das Geschwindigkeitsprofil bei 0.7 m/s. Fig. 15 c, d zeigen das Geschwindigkeitsprofil bei 2 m/s und Fig. 15 e, f zeigen das Geschwindigkeitsprofil bei 4 m/s.

Fig 15 a, c und e beziehen sich dabei auf die in Fig. 14 abgebildete vorbeschriebene Sensorgeometrie. Fig. 15 b, d und f stellen das Geschwindigkeitsprofil bei der in Fig. 13 dargestellten Variante dar.

Das Messmedium in Fig. 15 a-f ist Wasser. Der Balken unterhalb der Stirnseite stellt vereinfacht einen beheizbaren Temperatursensor 48, 58 dar.

Dabei weisen die Geschwindigkeitsprofile der Fig. 15 a, c und e des Sensors der Fig. 14 eine stärkere Verwirbelung bzw. Rezirkulation des Geschwindigkeitsprofils des Messmediums im Bereich des beheizbaren Temperatursensors 58 auf. Dadurch wird weniger Wärme von der Oberfläche des Sensors 51 abtransportiert. Dabei ist allerdings der Wärmetransfer auch abhängig vom Umfang der Verwirbelung und damit von der Geschwindigkeit des Mediums entlang der Stirnfläche 53. Dies resultiert in abgeknickten Übergängen im Kurvenverlauf bei Aufnahme einer charakteristischen Kurve, was ungünstig für die Auswertung der Kurve ist. Idealerweise sollte eine anliegende Grenzschicht über dem Heizer bzw. dem beheizbaren Temperatursensor durch eine lokale Verlangsamung und/oder einer Verwirbelung der Strömung ausbilden. In diesen Fällen steigt die Heizrate zwischen der festen Phase (der Sensorstirnfläche) und der flüssigen Phase (dem Messmedium) an und die Biot-Zahl wird reduziert. Die partielle Verlangsamung sollte konsistent über den gesamten Messbereich sein. Dadurch entsteht eine charakteristische Kurve ohne abgeknickte Übergänge und mit hoher Sensitivität.

Die in Fig. 13 dargestellte Sensorgeometrie weist, wie in dem Geschwindigkeitsprofilen der Fig. 15 b, d, und f erkennbar, demgegenüber ebenfalls eine reduziertere Tendenz zur Ausbildung einer Rezirkulation auf, jedoch liegt an der Oberfläche der Stirnseite eine dünne Grenzschicht an, welche für eine knickfreie gleichmäßige Kurvenform der Sensorcharakteristik sorgt. Dadurch wird ein gleichmäßiges Strömungsverhalten entlang des Temperatursensors generiert der wesentlich unabhängiger ist von der Strömungsgeschwindigkeit des Mediums und eine höhere Sensitivität aufweist.

Fig. 16 a-d zeigen die Spannungsverläufe und die Verformungen bei den jeweiligen anliegenden Drücken. Da allerdings die metallische Sensorkappe elastisch verformbar ist, wird der überwiegende Teil der verformten Stirnflächenwieder bei Druckentlastung weitestgehend rückgebildet.

Fig. 16 a und c zeigt das den Spannungsverlauf an der Stirnfläche gemäß Fig. 1-4. Fig. 16 a zeigt den Spannungsverlauf bei einem Außendruck von 40 bar. Die maximale Spannungsbelastung betrug in dieser Variante 350 MPa. Die Spannungsbelastungen an den Seitensegmenten der Stirnflächen sind vernachlässigbar gering. Die wesentliche Spannungsbelastung findet auf das Mittelsegment senkrecht zur Strömungsrichtung S statt. Das Mittelsegment wirkt der zunehmenden Spannungsbelastung durch eine Ausgleichsverformung in Form einer Innenwölbung entgegen. Diese Innenwölbung nimmt-wie aus Fig. 16c erkennbar ist - bei einer Spannungsbeaufschlagung von 60 bar noch weiter zu.

Bereits bei einer Spannungsbelastung von 350 MPa wird die Elastizitätsgrenze der Sensorstirnfläche des Sensors der Fig. 1-4 (Wandstärke = ca. 0,4 mm) überschritten, so dass neben einer elastische Verformung der Stirnfläche auch eine dauerhaft plastische Verfomung der Stirnfläche erfolgt. Durch diese plastische Verformung werden Messfehler hervorgerufen. Die Elastizitätsgrenze dieses Sensors beträgt bei dieser Ausführungsvariante etwa 310-330 MPa.

Demgegenüber weist die Stirnfläche des Sensors der Fig. 13 (Wandstärke ca. 0,6 mm) - wie aus Fig. 16 b hervorgeht - lediglich eine partielle maximale Spannungsbelastung von etwa 250 MPa auf, welche sich zudem auf einen wesentlich geringeren Flächenbereich der Stirnfläche des Sensors verteilt.

Fig. 16c zeigt die Stirnfläche des Sensors der Fig. 1-4 bei einem Außendruck von 60 bar. Die Stirnfläche wird dabei im hohen Maße plastisch deformiert. Die Maximalspannungsbelastung auf die Oberfläche liegt bei 600 Mpa.

Demgegenüber liegt die Spannungsbelastung der Stirnfläche bei Fig. 7d unter einem Außendruck von 60bar bei etwa 330-350 MPa.

### Bezugszeichen

- 1: Sensor;
- 2: Sensorkorpus;
- 3a, 3c: Seitensegmente;
- 3b: Mittelsegment;
- 4: erstes Widerstandsthermometer;
- 5: zweites Widerstandsthermometer;
- 6: Grenzschicht;
- 7: Rezirkulation;
- 20: Seitenstufe;
- 21: Mittelstufe
- 22: Seitenstufe;
- 23: Anschlussdrähte;
- 25: Platine;
- 27: Kabel;
- 28: Rastelemente;
- 29: Eingriff;
- 31: Verstärkungselement
- 32: Silikonkörper
- 33: Silikonkörper
- 41, 51: Sensor
- 43, 53: Stirnfläche
- 43a, 53a: erstes stromaufwärtiges Seitensegment
- 43b, 53b: Mittelsegment
- 43c, 53c: zweites stromabwärtiges Seitensegment
- 43d, 43e: Stützsegment
- 53d, 53e: Stützsegment
- 44a-e: Knickkanten
- 46, 56: Randkante
- 47, 57: Mantelfläche
- 48, 58: Temperaturfühlerelement
- α, β: Neigungswinkel der Seitensegmente;
- γ: Neigungswinkel der Stützsegmente gegenüber dem Mittelsegment
- Pₐ: Punkt
- P_{c}: Punkt
- M: Mittelpunkt;
- d: Durchmesser-Sensorkorpus; und
- S: Strömungsrichtung
- A: Längsachse
- C: Achse

## Patentansprüche

1. Thermisches Durchflussmessgerät zur Bestimmung und/oder Überwachung eines Massedurchflusses eines Messmediums durch ein Messrohr umfassend einen Sensor mit zumindest einem ersten und einem zweiten Temperaturfühlerelement, welche insbesondere jeweils ein Dünnfilm-Widerstandsthermometer aufweisen, wobei eines der Temperaturfühlerelemente beheizbar ist, wobei der Sensor einen zylindrischen Sensorkorpus (2) mit einer Längsachse (A) und eine an einem Ende des Sensorkorpus angeordnete Stirnfläche (3) aufweist, welche in zumindest drei nebeneinander angeordnete und mit dem Medium in Kontakt stehenden, in einem Längsschnitt ebenen Segmente (3a-3c) mit einem ersten Seitensegment (3a), einem Mittelsegment (3b) und einem zweiten Seitensegment (3c) aufgeteilt ist, wobei der Flächennormalenvektor zumindest des ersten Seitensegments (3a) mit der Längsachse (A) des Sensors einen Winkel (α) von zumindest 5° einschließt und wobei der Flächennormalenvektor zumindest des zweiten Seitensegments (3c) mit der Längsachse (A) des Sensors einen Winkel (β) von zumindest 5° einschließt.

2. Thermisches Durchflussmessgerät nach Anspruch 1, wobei die drei Segmente (3a-3c) in der Strömung des Messmediums ausgerichtet sind, wobei das erste Seitensegment das stromaufwärtige erste Seitensegment oder das stromabwärtige zweite Seitensegment ist.

3. Thermisches Durchflussmessgerät nach Anspruch 1 oder 2, **dadurch gekennzeichnet, dass** der Flächennormalenvektor der geneigten Fläche des ersten Segments mit der Längsachse (A) einen Winkel (α) von zumindest 8°, besonders bevorzugt zwischen 10-35° einschließt.

4. Thermisches Durchflussmessgerät nach einem der vorhergehenden Ansprüche, **dadurch gekennzeichnet, dass** das stromaufwärtige erste Seitensegment (43a) eine größere Fläche aufweist als das stromabwärtige zweite Seitensegment (43c).

5. Thermisches Durchflussmessgerät nach Anspruch 4, **dadurch gekennzeichnet, dass** zwischen dem stromaufwärtigen ersten Seitensegment (43a) und dem Mittelsegment (43b) eine erste Knickkante (44a) definiert ist, und dass zwischen dem stromabwärtigen zweiten Seitensegment (43c) und dem Mittelsegment (43b) eine zweite Knickkante (44b) definiert ist, und wobei der Abstand zwischen dem entgegen zur Strömungsrichtung(S) äußersten randseitigen Punkt (Pₐ) des stromaufwärtigen ersten Seitensegments (43a) zur ersten Knickkante (44a) im Wesentlichen gleich ist zum Abstand zwischen dem in Strömungsrichtung (S) äußersten randseitigen Punkt (P_{c}) des stromabwärtigen zweiten Seitensegments (43c) zur zweiten Knickkante (44c).

6. Thermisches Durchflussmessgerät nach einem der vorhergehenden Ansprüchen, **dadurch gekennzeichnet, dass** die Stirnfläche (43, 53) aus einem Metallblech ist, welche zwischen dem Messmedium und den Temperaturfühlerelementen (48, 58) angeordnet ist und wobei das Metallblech zwische 0,5 bis 0,7 mm dick ist.

7. Thermisches Durchflussmessgerät nach einem der vorhergehenden Ansprüche, **dadurch gekennzeichnet, dass** senkrecht zur Strömungsrichtung (S) des Mediums an das Mittelsegment (43b, 53b) an jedem Ende des Mittelsegments, jeweils ein das Mittelsegment stabilisierendes Stützsegment (43d, 43e, 53d, 53e) angrenzt.

8. Thermisches Durchflussmessgerät nach einem der vorhergehenden Ansprüche, **dadurch gekennzeichnet, dass** das stabilisierende Stützsegment (43d, 43e, 53d, 53e) gegenüber der Ebene des Mittelsegments (43b, 53b) in einem Winkel (γ) zwischen 10-80°, besonders bevorzugt in einem Winkel von 50-70° abgewinkelt ist.

9. Thermisches Durchflussmessgerät nach einem der vorhergehenden Ansprüche, **dadurch gekennzeichnet, dass** das erste Temperaturfühlerelement als plattenförmiges Dünnschichtelement ausgebildet ist.

10. Thermisches Durchflussmessgerät nach einem der vorhergehenden Ansprüche, **dadurch gekennzeichnet, dass** das erste Temperaturfühlerelement im Wesentlichen parallel zu der Fläche des ersten Segments (3a) ausgerichtet sind.

11. Thermisches Durchflussmessgerät, nach einem der vorhergehenden Ansprüche, **dadurch gekennzeichnet, dass** das Mittelsegment (3b) eine Fläche mit einem Flächennormalenvektor aufweist, welcher entlang der Längsachse verläuft.

12. Thermisches Durchflussmessgerät, nach einem der vorhergehenden Ansprüche, **dadurch gekennzeichnet, dass** das erste Segment zumindest 5%, vorzugsweise zumindest 15%, insbesondere 20-40% der Stirnfläche bildet.

13. Thermisches Durchflussmessgerät nach einem der vorhergehenden Ansprüche, **dadurch gekennzeichnet, dass** das erste Segment durch eine Neigung die Ausbildung einer thermischen Grenzschicht mit erhöhter Grenzschichtdicke bewirkt.

14. Thermisches Durchflussmessgerät nach einem der vorhergehenden Ansprüche 1-7, **dadurch gekennzeichnet, dass** durch eine zwischen Mittelsegment und zweitem Segment angeordnete Kante im strömenden Medium eine Rezirkulation der Strömung bewirkt wird.

15. Thermisches Durchflussmessgerät, nach einem der vorhergehenden Ansprüche **dadurch gekennzeichnet, dass** das erste und zweite Temperaturfühlerelement beheizbar sind und jeweils über zwei Betriebszustände verfügen, wobei in einem ersten Betriebszustand das jeweilige Temperaturfühlerelement auf eine konstante Temperatur eingestellt wird und in einem zweiten Betriebszustand das jeweilige Temperaturfühler die Mediumstemperatur ermittelt, wobei das erste Temperaturfühlerelement sich im ersten Betriebszustand befindet, sofern sich das zweite Temperaturfühlerelement im zweiten Betriebszustand befindet und das erste Temperaturfühlerelement sich im zweiten Betriebszustand befindet, sofern sich das zweite Temperaturfühlerelement im ersten Betriebszustand befindet und wobei das thermische Durchflussmessgerät eine Schaltung aufweist zum Umschalten des ersten und des zweiten Temperaturfühlerelements zwischen dem ersten und dem zweiten Betriebszustand.

16. Thermisches Durchflussmessgerät, nach einem der vorhergehenden Ansprüche, **dadurch gekennzeichnet, dass** der Sensor einen Sensorkorpus und eine Sensorkappe aufweist, wobei die endständige Stirnfläche auf der Sensorkappe angeordnet ist.

17. Verwendung eines thermischen Durchflussmessgerätes nach einem der vorhergehenden Ansprüche zur Bestimmung und/oder Überwachung des Massedurchflusses einer durch ein Messrohr strömenden Flüssigkeit.

## Claims

1. Thermal flowmeter designed to determine and/or monitor a mass flow of a measured medium through a measuring tube,
said flowmeter comprising a sensor with at least a first and a second temperature sensor element, which each have a thinfilm resistance thermometer, wherein one of the temperature sensing elements can be heated, wherein the sensor has a cylindrical sensor body (2) with a longitudinal axis (A) and a front surface (3) arranged on an end of the sensor body, wherein said surface is divided into at least three segments (3a-3c) that are planar in a longitudinal section, wherein said segments are arranged side by side and are in contact with the medium, with a first side segment (3a), a middle segment (3b) and a second side segment (3c), wherein the surface normal vector at least of the first side segment (3a) forms an angle (σ) of at least 5° with the longitudinal axis (A) of the sensor and wherein the surface normal vector of at least the second side segment (3c) forms an angle (β) of at least 5° with the longitudinal axis (A) of the sensor.

2. Thermal flowmeter as claimed in Claim 1, wherein the three segments (3a-3c) are aligned in the flow of the measured medium, wherein the first side segment is the upstream first side segment or the downstream second side segment.

3. Thermal flowmeter as claimed in Claim 1 or 2, **characterized in that** the surface normal vector of the inclined surface of the first segment forms an angle (σ) of at least 8°, particularly preferably between 10 and 35°, with the longitudinal axis (A).

4. Thermal flowmeter as claimed in one of the previous claims, **characterized in that** the upstream first side segment (43a) has a larger surface than the downstream second side segment (43c).

5. Thermal flowmeter as claimed in Claim 4, **characterized in that** a first inclined edge (44a) is defined between the upstream first side segment (43a) and the middle segment (43b), and **in that** a second inclined edge (44b) is defined between the downstream second side segment (43c) and the middle segment (43b), and **in that** the distance between the outermost peripheral point (Pₐ) of the upstream first side segment (43a) in the opposite direction to the flow (S) and the first inclined edge (44a) is essentially equal to the distance between the outermost peripheral point (P_{c}) of the downstream second side segment (43c) in the flow direction (S) and the second inclined edge (44c).

6. Thermal flowmeter as claimed in one of the previous claims, **characterized in that** the front face (43, 53) is made from a metal sheet, which is arranged between the measured medium and the temperature sensing elements (48, 58), and wherein the metal sheet has a thickness between 0.5 and 0.7 mm.

7. Thermal flowmeter as claimed in one of the previous claims, **characterized in that,** perpendicular to the flow direction (S) of the medium, a support segment (43d, 43e, 53d, 53e) stabilizing the middle segment is adjacent to the middle segment (43b, 53b) at each end of the middle segment.

8. Thermal flowmeter as claimed in one of the previous claims, **characterized in that** the stabilizing support segment (43d, 43e, 53d, 53e) is inclined in relation to the plane of the middle segment (43b, 53b) at an angle (γ) between 10 and 80°, particularly preferably at an angle between 50 and 70°.

9. Thermal flowmeter as claimed in one of the previous claims, **characterized in that** the first temperature sensor element is designed as a plate-shaped thinfilm element.

10. Thermal flowmeter as claimed in one of the previous claims, **characterized in that** the first temperature sensor element is essentially oriented parallel to the surface of the first segment (3a).

11. Thermal flowmeter as claimed in one of the previous claims, **characterized in that** the middle segment (3b) has a surface with a surface normal vector, which extends along the longitudinal axis.

12. Thermal flowmeter as claimed in one of the previous claims, **characterized in that** the first segment forms at least 5 %, preferably at least 15 %, particularly between 20 and 40 % of the front surface.

13. Thermal flowmeter as claimed in one of the previous claims, **characterized in that** the first segment causes the formation of a thermal limit layer with an increased limit layer thickness on account of an inclination.

14. Thermal flowmeter as claimed in one of the Claims 1 to 7, **characterized in that** an edge situated between the middle segment and the second segment causes a recirculation of the flow in the flowing medium.

15. Thermal flowmeter as claimed in one of the previous claims, **characterized in that** the first and the second temperature sensor element can be heated and each has two operating states, wherein in a first operating state, the temperature sensor element is set to a constant temperature and, in a second operating state, the temperature sensor element determines the temperature of the medium, wherein the first temperature sensor element is in the first operating state as long as the second temperature sensor element is in the second operating state and the first temperature sensor element is in the second operating state as long as the second temperature sensor element is in the first operating state, and wherein the thermal flowmeter comprises a circuit designed to switch the first and the second temperature sensor element between the first and the second operating state.

16. Thermal flowmeter as claimed in one of the previous claims, **characterized in that** the sensor comprises a sensor body and a sensor cap, wherein the terminal front face is arranged on the sensor cap.

17. Use of a thermal flowmeter as claimed in one of the previous claims for determining and/or monitoring the mass flow of a liquid flowing through a measuring tube.

## Revendications

1. Débitmètre thermique destiné à la détermination et/ou à la surveillance d'un débit massique d'un produit mesuré à travers un tube de mesure,
lequel débitmètre comprend un capteur avec au moins un premier et un deuxième élément capteur de température, lesquels comportent chacun un thermomètre à résistance en couches minces, l'un des éléments capteurs de température pouvant être chauffé, le capteur comprenant un corps de capteur cylindrique (2) avec un axe longitudinal (A) et une surface frontale (3) disposée à une extrémité du corps de capteur, laquelle surface est divisée en au moins trois segments (3a-3c) plans dans une coupe longitudinale, lesquels segments sont disposés côte à côte et sont en contact avec le produit, avec un premier segment latéral (3a), un segment médian (3b) et un deuxième segment latéral (3c), le vecteur normal à la surface d'au moins le premier segment latéral (3a) formant un angle (σ) d'au moins 5° avec l'axe longitudinal (A) du capteur et le vecteur normal à la surface d'au moins le deuxième segment latéral (3c) formant un angle (β) d'au moins 5° avec l'axe longitudinal (A) du capteur.

2. Débitmètre thermique selon la revendication 1, pour lequel les trois segments (3a-3c) sont alignés dans l'écoulement du produit mesuré, le premier segment latéral étant le premier segment latéral amont ou le deuxième segment latéral aval.

3. Débitmètre thermique selon la revendication 1 ou 2, **caractérisé en ce que** le vecteur normal à la surface de la surface inclinée du premier segment forme un angle (σ) d'au moins 8°, de préférence compris entre 10 et 35°, avec l'axe longitudinal (A).

4. Débitmètre thermique selon l'une des revendications précédentes, **caractérisé en ce que** le premier segment latéral amont (43a) présente une plus grande surface que le deuxième segment latéral aval (43c).

5. Débitmètre thermique selon la revendication 4, **caractérisé en ce qu'**une première arête d'inflexion (44a) est définie entre le premier segment latéral amont (43a) et le segment médian (43b), et **en ce qu'**une deuxième arête d'inflexion (44b) est définie entre le deuxième segment latéral aval (43c) et le segment médian (43b), et **en ce que** la distance entre le point périphérique le plus extérieur (Pₐ) du premier segment latéral amont (43a) dans le sens opposé à l'écoulement (S) et la première arête d'inflexion (44a) est sensiblement égale à la distance entre le point périphérique le plus extérieur (P_{c}) du deuxième segment latéral aval (43c) dans le sens d'écoulement (S) et la deuxième arête d'inflexion (44c).

6. Débitmètre thermique selon l'une des revendications précédentes, **caractérisé en ce que** la face frontale (43, 53) est constituée d'une tôle métallique, qui est disposée entre le produit mesuré et les éléments capteurs de température (48, 58), et la tôle métallique présentant une épaisseur comprise entre 0,5 et 0,7 mm.

7. Débitmètre thermique selon l'une des revendications précédentes, **caractérisé en ce que**, perpendiculairement à la direction d'écoulement (S) du produit, un segment de support (43d, 43e, 53d, 53e) stabilisant le segment médian est adjacent au segment médian (43b, 53b) à chaque extrémité du segment médian.

8. Débitmètre thermique selon l'une des revendications précédentes, **caractérisé en ce que** le segment de support stabilisateur (43d, 43e, 53d, 53e) est incliné par rapport au plan du segment médian (43b, 53b) selon un angle (γ) compris entre 10 et 80°, de préférence selon un angle compris entre 50 et 70°.

9. Débitmètre thermique selon l'une des revendications précédentes, **caractérisé en ce que** le premier élément capteur de température est conçu en tant qu'élément à couches minces en forme de plaque.

10. Débitmètre thermique selon l'une des revendications précédentes, **caractérisé en ce que** le premier élément capteur de température est orienté pour l'essentiel parallèlement à la surface du premier segment (3a).

11. Débitmètre thermique selon l'une des revendications précédentes, **caractérisé en ce que** le segment médian (3b) présente une surface avec un vecteur normal à la surface, qui s'étend le long de l'axe longitudinal.

12. Débitmètre thermique selon l'une des revendications précédentes, **caractérisé en ce que** le premier segment constitue au moins 5 %, de préférence au moins 15 %, notamment entre 20 et 40 % de la surface frontale.

13. Débitmètre thermique selon l'une des revendications précédentes, **caractérisé en ce que** le premier segment provoque la formation d'une couche limite thermique avec une épaisseur de couche limite accrue en raison d'une inclinaison.

14. Débitmètre thermique selon l'une des revendications de 1 à 7, **caractérisé en ce qu'**un bord situé entre le segment médian et le deuxième segment provoque une recirculation de l'écoulement dans le produit en écoulement.

15. Débitmètre thermique selon l'une des revendications précédentes, **caractérisé en ce que** le premier et le deuxième élément capteur de température peuvent être chauffés et disposent chacun de deux états de fonctionnement, de sorte que, dans un premier état de fonctionnement, l'élément capteur de température respectif est réglé à une température constante et, dans un deuxième état de fonctionnement, l'élément capteur de température respectif détermine la température du produit, le premier élément capteur de température étant dans le premier état de fonctionnement lorsque le deuxième élément capteur de température est dans un deuxième état de fonctionnement et le premier élément capteur de température étant dans le deuxième état de fonctionnement lorsque le premier élément capteur de température est dans un premier état de fonctionnement, et le débitmètre thermique comprenant un circuit destiné à la commutation du premier et du deuxième élément capteur de température entre le premier et le deuxième état de fonctionnement.

16. Débitmètre thermique selon l'une des revendications précédentes, **caractérisé en ce que** le capteur comprend un corps de capteur et un capuchon de capteur, la face frontale terminale étant disposée sur le capuchon de capteur.

17. Utilisation d'un débitmètre thermique selon l'une des revendications précédentes, destiné à la détermination et/ou à la surveillance du débit massique d'un liquide s'écoulant à travers un tube de mesure.
